# EUROPEAN PATENT APPLICATION

(11) **EP 2 657 616 A2**
(43) Date of publication of application: **30.10.2013**
(21) Application number: 13380006.0
(22) Date of filing: 07.03.2013
(51) Int. Cl.: F24D 3/14

(54) **Decorative radiator with integrated water circuit**

(30) Priority: 08.03.2012 ES 201230347
(71) Applicant: Anguiano Poliuretanos, S.L., 26300 Nájera (La Rioja) (ES)
(72) Inventor: Anguiano Martínez, Jacinto, 26300 Nájera (La Rioja) (ES)
(74) Representative: Gil-Vega, Victor

(57) **Abstract**

Decorative radiator with integrated water circuit and procedure for the forming pf the radiator, which can be installed either in vertical or in horizontal position, with all its sides exposed, with the exception of the rear part, and which comprises an inner hermetic heating circuit for the circulation of water, including two inlet and draining ports and which consists of thin stainless steel corrugated and flexible pipes embedded in and concealed by a mixture consisting of synthetic resins and heat conductive mineral loads that, owing to the forming and moulding procedure, behave as a single item obtained as a single piece which can absorb the changes experienced by the radiator as a result of the surface contractions and expansions. The inner pipes comprise series of folds that make the radius of curvature so small that a greater length of heating tube can be introduced in the same radiator surface area, which is a continuous circuit.

## Description

### OBJECT OF THE INVENTION

The present invention refers to a radiator, being it understood as a heat emitting device used to exchange heat with the heating system and transfer it to the environment and which does not generate heat on its own, but as part of the heating facilities. The invention describes a decorative radiator, since all its visible sides may show different shapes, textures, reliefs, colours and aesthetic finishing, simulating the look of different materials, like slate, granite, quartz, etc. or different compositions, like stonework, bricks, concrete, metal, fabric, ceramic, etc.

### PRIOR ART

Currently, there are several types of radiators, based on the circulation of hot water:
- Radiators made of steel plates, die cut and joined by welding.
- Radiators comprising ribs made of a material which can be machined by means of casting and injection methods, such as cast metal, aluminium or similar materials.
- Decorative or designer radiators. There are two different types:
   1. Those which basically consist of a series of different steel tubes which are welded to obtain many different shapes and compositions, and which are subsequently painted with any type or finishing or colour.
   2. Those made of a synthetic material - polyamide - at the exposed face, with pipes through which water circulates, and which is not substantially a heat conductor. This type of radiator comprises a rear panel made of a heat conductor material and a series of cooling nerves to exchange heat with the surrounding air.
      This last type of radiator (Patent document ES 2 258 567 T3) enjoys the advantage that the exposed face may be customised with different types of finishing, colours reliefs or engravings, but it also has the disadvantage that the synthetic material used is not a heat conductor, thus requiring a conductive rear part which is in contact with the hot water and allows to transfer the heat to the environment by means of a series of cooling nerves. This rear panel usually consists of an aluminium plate and must be coupled to the synthetic casing, thus obtaining a radiator with two different bodies that must be thoroughly sealed so that the radiator is perfectly water-tight. This sealing process entails high labour costs, which should be added to the complex injection-moulding manufacturing process of the polyamide casing and its complex channels. All these circumstances imply a high price of the final product.

The prior state of the art also comprises patent documents such as KR20040082104 which describes a prefabricated panel used to circulate hot water for heating, using a circuit of pipes made of resin; patent application KR20020004704 which describes a radiating heating system by means of synthetic resin panels; JP2000037741 which relates to a heat-conductive resin panel which can be used to obtain an underfloor heating system; patent document JP6180125 where an underfloor heating system is also described, consisting of panels incorporating a piping system for the circulation of hot water; document JP1124988 which describes the forming of a flat heating panel, or document JP61020731 which describes the configuration of a modular tubular body.

None of the consulted documents belonging to the prior art includes the array of technical characteristics that describe the essential features of the invention, which solve the technical problem posed but in an innovative manner and involving inventive step.

### DESCRIPTION OF THE INVENTION

The present invention includes a series of improvements, when compared with the state of the prior art, which make that the object of the invention is a decorative radiator, manufactured with synthetic resins, but which is simultaneously a good conductor, since such resins are mixed with heath conductive mineral loads. Since the result of such mixture is a heat conductive polymer, the resin body itself is the one which exchanges heat with the ambient air of the room.

The composition of the material used to manufacture the radiator comprises two components that are perfectly differentiated:
1. The binding resin: many different types of products can be used to perform this function. Basically, products such as polyurethane, polyester, epoxy, silicone, etc. may be used. All of them are synthetic resins that are mixed with loads and that, after a catalytic or hardening process form a single body. These resins, to a greater or lesser extent, are bad heat conductors, and they have to be mixed with conductive loads.
2. The conductive loads: there are many products that can be used to perform this function. Two main groups may be differentiated:
   a. Minerals: Silica, calcium carbonate, talcum, kaolin, quartz, mica, cristobalite, wollastonite, barite, slate, clay, dolomite, etc. This type of loads is commonly used in their micronized state, or as sands with different granulometries.
   b. Metals: They are the best heat conductors, and the particles that are mainly used will be iron particles or chips, aluminium dust or blasting, etc.

The resin is mixed with the loads in the appropriate proportions to obtain a homogeneous and conductive polymer. These proportions may widely vary, depending on the resin and different types of load used. An example of a polymer that might be used to manufacture the radiator could be:

| **RESIN** | |
|---|---|
| Polyurethane | 22 % |
| Polyol | 8 % |
| Isocyanate | 14 % |
| | |

| **LOADS** | |
|---|---|
| Calcium carbonate | 13 % |
| Aluminium dust | 18 % |
| Cristobalite | 9 % |
| Silica | 11 % |
| Iron chips | 27 % |
| | |
| **Total Polymer** | 100 % |

The pipe used for the circulation of the hot water that transfers the heat to the rest of the radiator is located within the radiator. This pipe is completely covered by the conductive resin. The procedure used to manufacture the radiator also shows inventive step since, through the subsequent steps, a single body is obtained, formed by the combination of the resin and the pipe, which absorbs the changes experienced as a result of the expansion.

The procedure followed to mould the resin and insert the pipe is as follows:
1. A mould is prepared, which is similar to the original item that will be reproduced. The mould can be made of slate, timber, granite... etc. and cut to the desired size.
2. A priming layer is applied to the mould, such priming layer being either transparent or of a specific colour. Thanks to the chemical compatibility between the priming layer and the resin used for the manufacturing of the radiator, both of them will be perfectly bound together. This priming layer can also be used as a demoulding agent, as well as a base for the application of paint, enamels or other products, to obtain the desired finishing. In those cases where the finishing uses a single colour, the priming layer itself will be used as the finishing, thus avoiding the need for subsequent treatments of the radiator.
3. Once the priming layer has been applied to the mould, the mould is filled with a first resin layer which has been previously mixed with the heat-conducting mineral loads.
4. Then, when the resin still has a liquid/viscose appearance, the pipe is deposited over the first resin layer. The pipe floats on such layer and the mould is completely filled, so that the pipe is suspended between the first and the second layer. This way, it is completely embedded by the resin at the center of the radiator, forming a single body.
5. The mould is closed and once the hardening process of the resin has been finished, the item is removed, which shows a single body with an inner piping circuit, where only the inlet and draining ports are exposed, with their relevant terminals. The visual finishing of the item, after leaving the mould, will be the colour of the priming layer previously applied, and the positive print of the relevant relief of the mould. A piping circuit is inserted within this single resin body, to allow the circulation of hot water. Owing to the design procedure, no air bleeding valve is required, since no air is trapped inside the circuit.

The radiator of the invention may experience slight changes in size throughout its useful life, as a result of the temperature changes caused by the expansion/contraction due to temperature changes, and owing to the mixture of resins and loads used to manufacture it. Thus, the hermetic inner circuit must have certain flexibility to join the resin mixture in its expansion/contraction movements. If such pipe is not flexible, for instance, an ordinary metallic pipe, to radiator would end showing cracks in the weakest areas, as a result of the differences between the expansion and contraction of the steel, compared with those of the resin.

Apart from being flexible, the pipe that transmits the heat to the radiator should be a good conductor since many calories would otherwise be lost in the process of transmitting the heat from the water to the conductive resin. This is the reason why it is not advisable to use pipes made of synthetic materials (plastic, rubber, polyurethane, etc.) since they are insulating materials, to a greater or lesser extent.

The pipe recommended to prepare the circuit would be:
- A corrugated stainless steel pipe according to the UNI EN 10028-7 specifications for heating and plumbing facilities.
- Highly resistant to corrosion and wear, which allows a useful life of more than thirty years.
- Slight resistance to traction/elongation; it must perfectly withstand the expansion and contraction forces suffered by the radiator as a result of temperature changes. The folds of the material allow it to shrink or expand in line with the expansion or contraction experienced by the radiator, and they also make it easier to bend the pipe for the purpose of preparing the circuit so that it is adapted to the size of the radiator where it will be inserted.
- High resistance to extreme temperatures; it should temperatures ranging between -60° C and 550° C.
- High resistance to pressure; up to 15 bar, which guarantees watertightness at the normal operating pressure of the facilities (3 bar max).
- High water temperature transfer towards the outer side of the pipe, thanks to its thin stainless steel wall, which is 0.25 mm thick. The thin wall of the stainless steel tube can be easily run through by the heat transmitted by the water and distributed by the rest of the radiator.
- Easy to be bent; the pipe withstands curvatures with radiuses of less than 20 mm, which makes it easier to build the circuit without the need to use couplings or joints, which allows to introduce many meters of pipe within the radiator.

Since this is a flexible, thin and corrugated material, the radius of curvature allows performing many turns in a reduced space, without the need to cut or weld, thus facilitating the preparation of the circuit, which in turn allows the inclusion of many meters in a tiny space, which entails a larger number of calories per square meter.

The radiator according to the invention comprises anchoring means to secure it to the wall where it is to be installed, so that it is offset some centimetres with respect to such wall. This generates the stack effect required to allow the circulation of the ambient air of the room and improve the performance of the radiator.

As a result of the changes in size suffered by the radiator which is the object of this invention, the anchoring means that fix it to the wall cannot be of a fixed type. Rather, they should allow some degree of mobility, both in horizontal and vertical directions. On the other hand, these anchoring means must be resistant enough to withstand the downwards force caused by the weight of the radiator and the outwards force exercised by the radiator as a result of its trend to bulge. This curvature is the consequence of the fact that the loads mixed with the resin do not show the same concentration in the exposed face of the radiator and in the rear face and, as a result of the temperature changes, one of the sides of the radiator expands or shrinks more than the other one.

From a visual point of view, the decorative radiator according to the invention consists of a sensibly flat panel of variable dimensions, both in terms of its surface area and its thickness, depending on the size of the room to be heated. This panel shows a single body whose exposed or decorated faces -all except the rear face- can be customised with different types of finishing. For instance, it is possible to simulate different types of minerals, such as slate, granite, stonework or brick, polished concrete, etc. Also metal finishings can be obtained, such as chrome plating, oxides, aged copper, golden and silver effects, gold leaves, etc. There is also the possibility of simulating different materials such as fabric, leather, wood, ceramic, etc. In summary, a broad range of options which can be combined with the design of the room where it will be installed.

Finally, the advantages and properties of the present invention are:
- IT FACILITATES THE MOULDING PROCESS, as it is a synthetic resin which can be easily moulded, that can be adapted to any size, texture and shape.
- IT IS A SYNTHETIC MATERIAL, ALTHOUGH IT IS A GOOD CONDUCTOR, since it incorporates heat conductive mineral loads.
- IT CONSISTS OF A SINGLE BODY which works simultaneously, since the manufacturing procedure allows both items (resins + loads and inner pipe) to absorb the expansion typical of a heating item, thus preventing cracks. No air bleeding valve is required, thanks to the design procedure, since no air is trapped inside it.
- The inner heating hermetic circuit consists of INNER PIPES MADE OF CORRUGATED AND FLEXIBLE STEEL that foster both the absorption of the above-mentioned expansion and the possibility of bending which allows introducing more meters of heating pipe within the same radiator surface area.
- The ANCHORING MEANS implemented foster the "stack effect", since they allow separating the radiator from the vertical source and absorb the different movements caused by expansions/contractions.
- AESTHETIC EFFECT, since the priming layer applied to the mould provides the radiator a relief, engraving, colour or the finishing desired.
- ADAPTABILITY: the single-piece decorative radiator can be used as a partition wall to separate different environments, can be coupled to other similar modules to obtain a surface with greater heating capacity or can be installed as a vertical item resting on the floor, supported by legs or supports especially adapted to that purpose.

### BRIEF DESCRIPTION OF THE ATTACHED FIGURES

Figure 1: shows a view of the finished radiator.
Figure 2: view of the inner heating hermetic circuit of the invention.

### References:

1. Surface texture or finishing
2. Inlet and draining ports
3. Inner heating circuit

### DESCRIPTION OF A PREFERRED EMBODIMENT OF THE INVENTION

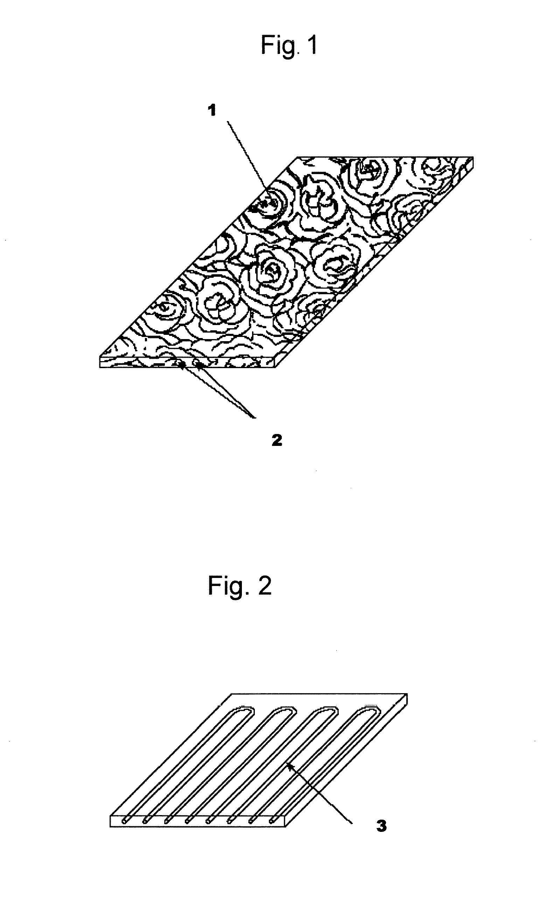

Figure 1 shows a view of the structure of the finished radiator, after removing it from the mould and once the priming layer has been applied to the mixture of resins and conducting loads, showing a surface finishing with the desired texture or engraving (1). The only visible parts are the inlet and draining ports of the hermetic circuit (2).
Figure 2 shows a perspective view of the heating circuit (3) comprising the inner part of the radiator assembly, which consists of pipes made of thin, corrugated and flexible stainless steel that can be bent so that it is possible to insert a larger length of steel tube in the same radiator surface.

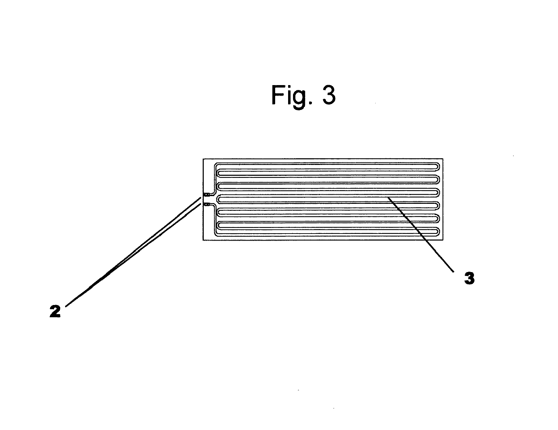

Figure 3 shows a plan view of the heating circuit (3) which forms the inner section of the radiator assembly, comprising stainless steel tubes and leaving exposed the inlet and draining ports of the hermetic circuit (2).

## Claims

1. Decorative radiator with integrated water circuit, intended to be mounted on a wall, either in horizontal or vertical position, which has the appearance of a panel or mural with all its sides exposed, with the exception of the rear panel, **characterised in that** in comprises, in the inner part, a heating hermetic circuit for the circulation of hot water, which includes two inlet and draining ports and consists of corrugated and flexible thin stainless steel pipes embedded in and concealed by a mixture comprising synthetic resins and heat conductive mineral loads that, owing to the shaping and moulding process, work as a single element, since it is obtained as a single piece (the resins and pipes) which can absorb the vibrations experienced by the radiator as a result of surface expansions and contractions. The inner pipes are thin enough to allow a series of folds that make the radius of curvature so small that a greater length of heating tube can be introduced in the same radiator surface area, which is a continuous circuit.

2. Decorative radiator with integrated water circuit according to claim 1, **characterised in that** the wall mounting anchoring means allow fixing the radiator at a certain distance from the wall, which favours the stack effect and allows a certain degree of vertical and longitudinal movement of the radiator.

3. Decorative radiator with integrated water circuit according to claim 1, **characterised in that** the single piece decorative radiator can be used as a partition wall to separate different spaces, or can be coupled to additional similar modules, to obtain a surface with a greater heating surface, and it can also be used as a vertical item supported on the floor by means of legs or supports, especially adapted for such function.

4. Procedure for the forming of the decorative radiator with integrated water circuit **characterised in that** it comprises several steps:
a. Arranging of a mould similar to the relief of the original item which is to be reproduced, with the same texture and cut at the desired size.
b. Application to the mould of a priming layer, either transparent or of a specific colour which, owing to chemical compatibility reasons, will be perfectly adhered to the resin filling. Such priming layer may also be used as a demoulding agent, as well as a base for subsequent treatments.
c. The mould is filled with a first layer of the resin, which has been previously mixed with the heat conductive mineral loads.
d. Then, when the resin still has a liquid/viscose appearance, the inner hermetic pipe circuit is deposited on the first resin layer. The pipes float over such layer and the mould is completely filled, so that the circuit is suspended between the first and the second layer. This way, it is completely embedded by the resin at the center of the radiator, forming a single body.
e. The mould is closed and once the hardening process of the resin has been finished, the single piece is removed along with the inner piping circuit intended for the circulation of water, which only has an inlet port and another draining port exposed, with their relevant terminal fittings. The visual finishing of the item, after leaving the mould, will be the colour of the priming layer previously applied, and the positive print of the relevant relief of the mould. Owing to the design procedure, no air bleeding valve is required, since no air is trapped inside the circuit.
